# EUROPEAN PATENT APPLICATION

(11) **EP 4 773 228 A1**
(43) Date of publication of application: **08.07.2026**
(21) Application number: 24887360.6
(22) Date of filing: 29.05.2024
(51) Int. Cl.: H01M 4/36, H01M 4/66, H01M 50/107, H01M 10/0587, H01M 10/054

(54) **SODIUM-ION BATTERY CELL, SECONDARY BATTERY, AND ELECTRIC DEVICE**

(30) Priority: 09.11.2023 CN 202311490160
(71) Applicant: Contemporary Amperex Technology Co., Limited, Ningde, Fujian 352100 (CN)
(72) Inventor: WEI, Xichen, Ningde, Fujian 352100 (CN); WANG, Dandan, Ningde, Fujian 352100 (CN)
(74) Representative: Ziebig Hengelhaupt Intellectual Property Attorneys Patentanwaltskanzlei PartGmbB
(86) International application number: PCT/CN2024/096072
(87) International publication number: WO 2025/097736

(57) **Abstract**

A sodium-ion battery cell, a secondary battery, and an electric device. The sodium-ion battery cell comprises an electrode assembly and a casing, wherein the casing is cylindrical; an accommodating cavity is provided inside the casing; and the electrode assembly is located inside the accommodating cavity. The electrode assembly comprises a negative electrode sheet, wherein the negative electrode sheet comprises a negative electrode current collector and a negative electrode active layer located on at least one surface of the negative electrode current collector, the density of the negative electrode current collector being less than or equal to 5.0 g/cm³. The group margin of the sodium-ion battery cell satisfies: 0.95 ≤ group margin < 1, where the group margin is the ratio of the diameter of the electrode assembly to the diameter of the accommodating cavity. The sodium-ion battery cell uses the negative electrode current collector having a relatively low density, combined with a relatively large group margin, and uses a cylindrical structure, such that the battery cell can achieve a relatively high gravimetric energy density, a relatively high volumetric energy density and relatively good cycling performance, thus being conducive to prompting the development of miniaturization and weight reduction of the battery cell.

## Description

### RELATED APPLICATION

The present application claims priority to Chinese Patent Application No. 2023114901604, filed on November 9, 2023 and entitled "SODIUM-ION BATTERY CELL, SECONDARY BATTERY, AND ELECTRIC DEVICE", which is incorporated herein by reference in its entirety.

### TECHNICAL FIELD

The present application relates to the technical field of secondary batteries, and in particular, to a sodium-ion battery cell, a secondary battery, and an electric device.

### BACKGROUND

The statements herein merely provide background information related to the present application and do not necessarily constitute the prior art.

Sodium-ion batteries have a relatively good cost advantage, which is beneficial to expanding the application range of the sodium-ion batteries. However, it is difficult to effectively balance the mass energy density and the volumetric energy density of the sodium-ion batteries, which restricts the development of miniaturization and lightweight design of the sodium-ion batteries.

### SUMMARY

To achieve the above objective, a first aspect of the present application provides a sodium-ion battery cell. The sodium-ion battery cell includes an electrode assembly and a housing, where the housing is cylindrical, an accommodating cavity is provided inside the housing, and the electrode assembly is located inside the accommodating cavity; the electrode assembly includes a negative electrode plate, the negative electrode plate includes a negative electrode current collector and a negative electrode active layer located on at least one surface of the negative electrode current collector, a density of the negative electrode current collector is ≤ 5.0 g/cm³, and a group margin of the sodium-ion battery cell satisfies: 0.95 ≤ group margin < 1, where the group margin is a ratio of a diameter of the electrode assembly to a diameter of the accommodating cavity.

According to the above sodium-ion battery cell, by using a negative electrode current collector with a relatively low density, combined with a relatively large group margin, and simultaneously using a cylindrical structure, the battery cell can have both a relatively high mass energy density and a relatively high volumetric energy density while achieving relatively good cycle performance.

In some embodiments, the density of the negative electrode current collector is 1.3 g/cm³ to 3.5 g/cm³. The density of the negative electrode current collector within this range can further reduce the weight of the negative electrode current collector, thereby further improving the mass energy density of the battery cell.

In some embodiments, the group margin of the sodium-ion battery cell is 0.95 to 0.97. The group margin of the sodium-ion battery cell within this range can achieve both a relatively high energy density and relatively good cycle performance.

In some embodiments, an elongation of the negative electrode current collector is ≥ 3%. The negative electrode current collector has a relatively large elongation, and can have relatively good pressure resistance performance during the preparation of the negative electrode plate, which can reduce the risk of fracture of the negative electrode plate during the cold pressing process, and is conducive to improving the compaction density of the negative electrode active layer. Optionally, the elongation of the negative electrode current collector is 3.5% to 5.0%.

In some embodiments, a ratio of a thickness of the negative electrode current collector to a thickness of the negative electrode active layer is ≤ 0.2. In this case, the thickness of the negative electrode active layer can be further increased, which is conducive to further improving the mass energy density and the volumetric energy density of the battery cell. Optionally, the ratio of the thickness of the negative electrode current collector to the thickness of the negative electrode active layer is 0.03 to 0.15.

In some embodiments, the thickness of the negative electrode current collector is 6 µm to 12 µm. The thickness of the negative electrode current collector within this range enables the negative electrode current collector to fulfill its function while ensuring the negative electrode plate has a relatively appropriate thickness, thereby enabling the battery cell to have a suitable volumetric energy density. Optionally, the thickness of the negative electrode current collector is 6.5 µm to 10 µm.

In some embodiments, the negative electrode current collector includes an aluminum foil or a metal/polymer composite current collector.

In some embodiments, the metal/polymer composite current collector includes a polymer substrate layer and a metal layer located on at least one surface of the polymer substrate layer. Optionally, the polymer substrate layer includes at least one of polypropylene, polyethylene terephthalate, polybutylene terephthalate, polystyrene, and polyethylene. Optionally, the metal layer includes at least one of copper, a copper alloy, aluminum, an aluminum alloy, nickel, a nickel alloy, titanium, a titanium alloy, silver, and a silver alloy.

In some embodiments, the sodium-ion battery cell further includes an electrolyte, and the electrolyte is located inside the accommodating cavity; the sodium-ion battery cell satisfies: m/C₀ ≤ 6 g/Ah, where m represents a mass of the electrolyte (unit: g), and C₀ represents a rated capacity of the sodium-ion battery cell (unit: Ah). m/C₀ within this range enables the battery cell to have a relatively large group margin while maintaining relatively good electrical performance, which is conducive to further improving the volumetric energy density of the battery cell. Optionally, 4 g/Ah ≤ m/C₀ ≤ 5 g/Ah.

In some embodiments, a compaction density of the negative electrode active layer is 0.7 g/cm³ to 1.3 g/cm³. The compaction density of the negative electrode active layer within this range enables the battery cell to have relatively high energy density. Optionally, the compaction density of the negative electrode active layer is 0.8 g/cm³ to 1.2 g/cm³.

In some embodiments, a ratio of a height of the battery cell to a diameter of the battery cell is greater than or equal to 3.5, optionally 4 to 6.

In some embodiments, the height of the battery cell is greater than or equal to 60 mm, optionally 70 mm to 300 mm.

In some embodiments, the diameter of the battery cell is greater than or equal to 21 mm, optionally 30 mm to 60 mm.

A second aspect of the present application provides a secondary battery. The secondary battery includes the sodium-ion battery cell.

A third aspect of the present application provides an electric device. The electric device includes at least one of the sodium-ion battery cell and the secondary battery.

### DETAILED DESCRIPTION

To facilitate the understanding of the present application, a more comprehensive description of the present application will be given below with reference to the related examples. The present application may, however, be implemented in many different forms and is not limited to the examples described herein. Rather, the purpose of providing these examples is to make the understanding of the content disclosed in the present application more thorough and comprehensive.

Unless defined otherwise, all technical and scientific terms used herein have the same meaning as commonly understood by those skilled in the art to which the present application belongs. The terms used in the specification of the present application are only for the purpose of describing specific examples, and are not intended to limit the present application. The term "and/or" used herein includes any and all combinations of one or a plurality of related listed items.

The "ranges" disclosed in the present application may be defined with lower and upper limits. A given range is defined by selecting a lower limit and an upper limit that delineate the boundaries of a particular range. Ranges defined in this manner may include or exclude the end values, any one of the end values may be independently included or excluded, and may be arbitrarily combined, that is, any lower limit may be combined with any upper limit to form a range. For example, if ranges of 60 to 120 and 80 to 110 are listed for a particular parameter, it will be appreciated that ranges of 60 to 110 and 80 to 120 are also anticipated. Additionally, if the minimum range values listed are 1 and 2, and the maximum range values listed are 3, 4, and 5, then the following ranges can all be anticipated: 1 to 3, 1 to 4, 1 to 5, 2 to 3, 2 to 4, and 2 to 5. In the present application, unless otherwise specified, the numerical range "a to b" represents an abbreviated representation of any combination of real numbers between a and b, where both a and b are real numbers. For example, the numerical range "0 to 5" indicates that all real numbers between "0 to 5" are listed herein, and "0 to 5" is merely an abbreviated representation of a combination of these numerical values. Additionally, when stating that a parameter is an integer ≥ 2, it is equivalent to listing that the parameter is, for example, an integer of 2, 3, 4, 5, 6, 7, 8, 9, 10, 11, 12, or the like. For example, when stating that a parameter is an integer selected from "2 to 10", it is equivalent to listing an integer of 2, 3, 4, 5, 6, 7, 8, 9, and 10.

In the present application, "a plurality of", "more", and the like, if not particularly limited, refer to a quantity greater than 2 or equal to 2. For example, "one or more" indicates one or greater than or equal to two.

Unless otherwise specified, all embodiments and optional embodiments of the present application can be combined with one another to form new technical solutions.

Reference in the present application to "example" means that a particular feature, structure, or characteristic described in combination with the example can be included in at least one example or embodiment of the present application. The references of the word in the context of the specification do not necessarily refer to the same example, nor to separate or alternative examples exclusive of other examples. It will be explicitly and implicitly understood by those skilled in the art that examples described herein can be combined with other examples. Reference in the present application to "embodiment" has a similar understanding.

Those skilled in the art can understand that, in the methods of the embodiments or examples, the order in which the steps are written does not imply a strict execution sequence or impose any limitation on the implementation process. The detailed execution sequence for each step should be determined based on functions and possible internal logic thereof. Unless otherwise specified, all steps of the present application can be performed sequentially or randomly. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b) and (c), or steps (a), (c) and (b), or steps (c), (a) and (b), or the like.

In the present application, open-ended technical features or technical solutions described with terms such as "contain", "include", and "comprise", unless otherwise specified, do not exclude an additional member beyond the listed members, and they may be interpreted as providing both a closed-ended feature or solution consisting of the listed members and an open-ended feature or solution that includes additional members beyond the listed members. For example, if A includes a1, a2, and a3, unless otherwise specified, A may further include another member, or may not include an additional member. This may be interpreted as providing both the feature or solution where "A consists of a1, a2, and a3" and the feature or a solution where "A includes not only a1, a2, and a3, but also another member".

In the present application, unless otherwise specified, A (such as B) indicates that B is a non-limiting example of A, and it can be understood that A is not limited to B.

In the present application, "optionally", "optional", and "option" refer to being present or being absent, that is, meaning selection from any of the two parallel options: "present" or "absent". If multiple instances of "option" appear in a technical solution, unless otherwise specified, with no contradiction or mutual constraint, each "option" is independent.

One embodiment of the present application provides a sodium-ion battery cell. The sodium-ion battery cell includes an electrode assembly and a housing, the housing is cylindrical, an accommodating cavity is provided inside the housing, and the electrode assembly is located inside the accommodating cavity; the electrode assembly includes a negative electrode plate, the negative electrode plate includes a negative electrode current collector and a negative electrode active layer located on at least one surface of the negative electrode current collector, the density of the negative electrode current collector is ≤ 5.0 grams per cubic centimeter (g/cm³), and the group margin of the sodium-ion battery cell satisfies: 0.95 ≤ group margin < 1, where the group margin is the ratio of the diameter of the electrode assembly to the diameter of the accommodating cavity.

According to the sodium-ion battery cell in this embodiment, the mass energy density of the battery can be effectively improved by using a negative electrode current collector with a relatively low density. However, in the prior art, the thickness of the current collector with a low density is typically designed to be thick, which has a certain impact on the volumetric energy density of the battery. To improve the volumetric energy density, the group margin of the battery can be increased. However, after the group margin is improved, the cell may experience excessive local stress during the expansion process, which affects the cycle performance of the battery. If the cylindrical structure is used, the stress on the cell inside the battery is more balanced, effectively alleviating the problem. Further, through the cooperation between the specific battery structure, the negative electrode current collector, and the group margin according to this embodiment, the battery can have relatively good cycle performance while achieving both a relatively high mass energy density and a relatively high volumetric energy density.

It can be understood that, in the sodium-ion battery cell, the accommodating cavity may be represented as a cavity defined by the housing in an enclosing manner. It can also be understood that the sodium-ion battery cell further includes a cover plate, and the cover plate cooperates with the housing to seal the accommodating cavity.

In some embodiments, the density of the negative electrode current collector is 1.3 g/cm³ to 3.5 g/cm³. The density of the negative electrode current collector within this range can further reduce the weight of the negative electrode current collector, thereby further improving the mass energy density of the battery cell. Optionally, the density of the negative electrode current collector may be 1.3 g/cm³, 1.5 g/cm³, 1.8 g/cm³, 2 g/cm³, 2.3 g/cm³, 2.5 g/cm³, 2.8 g/cm³, 3 g/cm³, 3.2 g/cm³, 3.5 g/cm³, or the like.

In some embodiments, the group margin of the sodium-ion battery cell is 0.95 to 0.97. The group margin of the sodium-ion battery cell within this range can improve the space utilization rate of the accommodating cavity and further improve the volumetric energy density of the battery cell. Optionally, the group margin of the sodium-ion battery may be 0.955, 0.96, 0.965, 0.97, or the like.

In some embodiments, the elongation of the negative electrode current collector is ≥3%. The negative electrode current collector has a relatively large elongation, and can have relatively good pressure resistance performance during the preparation of the negative electrode plate, which can reduce the risk of fracture of the negative electrode plate during the cold pressing process, and is conducive to further improving the energy density and the cycle performance. Optionally, the elongation of the negative electrode current collector is 3.5% to 5.0%. For example, the elongation of the negative electrode current collector may be 3%, 3.5%, 4%, 4.5%, 5%, or the like.

The elongation of the negative electrode current collector may be tested by the following method: The initial length H₁ of the negative electrode current collector is recorded. A stretching experiment is conducted using a Gotech tensile machine, and a tensile force is applied to two ends of the negative electrode current collector in the length direction at a stretching speed of 2 millimeters per minute (mm/min). Two ends of the stretching machine need to be tightly attached with a crepe adhesive tape to prevent the negative electrode current collector from loosening and falling off during stretching. The negative electrode current collector remains in a vertical and straight state during stretching. The fracture of the negative electrode current collector needs to occur somewhere in the middle, and data from fractures at two ends of the clamping fixture is discarded. Until fracture of the negative electrode current collector occurs, the length H₂ of the negative electrode current collector at the time of fracture is recorded. The elongation δ of the negative electrode current collector is calculated, where the elongation δ = (H₂ - H₁)/H₁ × 100%. Optionally, H₁ is 50 millimeters (mm).

In some embodiments, the ratio of the thickness of the negative electrode current collector to the thickness of the negative electrode active layer is ≤ 0.2. In this way, the thickness of the negative electrode active layer can be further increased, which is conducive to further improving the mass energy density and the volumetric energy density of the battery cell. Optionally, the ratio of the thickness of the negative electrode current collector to the thickness of the negative electrode active layer is 0.03 to 0.15. For example, the ratio of the thickness of the negative electrode current collector to the thickness of the negative electrode active layer may be 0.01, 0.02, 0.03, 0.04, 0.05, 0.06, 0.07, 0.08, 0.09, 0.1, 0.11, 0.12, 0.13, 0.14, 0.15, 0.16, 0.17, 0.18, 0.19, 0.2, or the like.

In some embodiments, the negative electrode current collector includes an aluminum foil or a metal/polymer composite current collector, and the metal/polymer composite current collector includes a polymer substrate layer and a metal layer located on at least one surface of the polymer substrate layer. Optionally, the polymer substrate layer includes one or more of substrates such as polypropylene (PP), polyethylene terephthalate (PET), polybutylene terephthalate (PBT), polystyrene (PS), and polyethylene (PE). Optionally, the metal layer includes at least one of copper, a copper alloy, aluminum, an aluminum alloy, nickel, a nickel alloy, titanium, a titanium alloy, silver, and a silver alloy.

In some embodiments, the polymer substrate layer of the metal/polymer composite current collector includes polypropylene, and the metal layer includes at least one of copper or a copper alloy.

In some embodiments, the polymer substrate layer of the metal/polymer composite current collector includes at least one of polyethylene terephthalate and polybutylene terephthalate, and the metal layer includes at least one of aluminum or an aluminum alloy.

The density of the composite current collector can be adjusted by adjusting the type, the proportion, or the like of the polymer and the metal added. Optionally, when the metal layer includes copper or a copper alloy, the density of the composite current collector may be adjusted in the range of 1.0 g/cm³ to 8.9 g/cm³. When the metal layer includes aluminum or an aluminum alloy, the density of the composite current collector may be adjusted in the range of 1.4 g/cm³ to 2.7 g/cm³.

Optionally, as some examples of the thickness of the negative electrode current collector, the thickness of the negative electrode current collector is 6 micrometers (µm) to 12 µm. The thickness of the negative electrode current collector within this range enables the negative electrode current collector to fulfill its function while ensuring the negative electrode plate has a relatively appropriate thickness, thereby enabling the battery cell to have a suitable volumetric energy density. Optionally, the thickness of the negative electrode current collector may be 6 µm, 7 µm, 8 µm, 9 µm, 10 µm, 11 µm, 12 µm, or the like. Further optionally, the thickness of the negative electrode current collector is 6.5 µm to 10 µm.

It can be understood that the sodium-ion battery cell further includes an electrolyte, and the electrolyte is located inside the accommodating cavity. Optionally, the electrolyte may be an electrolytic solution.

In some embodiments, the sodium-ion battery cell satisfies: m/C₀ ≤ 6 grams per ampere hour (g/Ah), where m represents the mass of the electrolyte (unit: g), and C₀ represents the rated capacity of the sodium-ion battery cell (unit: Ah). m/C₀ within this range enables the battery cell to have a relatively large group margin while maintaining relatively good electrical performance, which is conducive to further improving the volumetric energy density of the battery cell. Optionally, 4 g/Ah ≤ m/C₀ ≤ 5 g/Ah. Further optionally, m/C₀ may be 3 g/Ah, 3.5 g/Ah, 4 g/Ah, 4.5 g/Ah, 5 g/Ah, 5.5 g/Ah, 6 g/Ah, or the like. It can be understood that C₀ can be measured by the following method: The battery cell is discharged to 1.5 volts (V) at 0.33 coulombs (C), left to stand for 10 minutes (min); then the battery cell is charged to 3.9 V at 0.33C, left to stand for 10 min; then the battery cell is discharged to 1.5 V at 0.33C, and the discharge capacity at this point is recorded as the rated capacity.

It can also be understood that the mass m of the electrolyte in the battery cell can be measured by the following method: A battery cell sample is taken to measure the initial mass m₁ of the battery cell, the battery cell is disassembled, and the housing and the electrode assembly are cleaned with dimethyl carbonate for more than three times; after cleaning, the housing and the electrode assembly are dried, and the mass m₂ of the housing and the mass m₃ of the electrode assembly are measured, separately. The mass m of the electrolyte = m₁ - m₂ - m₃.

In some embodiments, the compaction density of the negative electrode active layer is 0.7 g/cm³ to 1.3 g/cm³. The compaction density of the negative electrode active layer within this range enables the battery cell to have relatively high energy density. Optionally, the compaction density of the negative electrode active layer is 0.8 g/cm³ to 1.2 g/cm³. Further optionally, the compaction density of the negative electrode active layer may be 0.8 g/cm³, 0.9 g/cm³, 1 g/cm³, 1.1 g/cm³, 1.2 g/cm³, 1.3 g/cm³, or the like.

In some embodiments, the ratio of the height of the battery cell to the diameter of the battery cell is greater than or equal to 3.5. Optionally, the ratio of the height of the battery cell to the diameter of the battery cell is 4 to 6. Further optionally, the ratio of the height of the battery cell to the diameter of the battery cell may be 3.5, 4, 4.5, 5, 5.5, 6, or the like.

Optionally, the height of the battery cell is greater than or equal to 60 mm. Further optionally, the height of the battery cell is 70 mm to 300 mm. For example, the height of the battery cell may be 60 mm, 65 mm, 70 mm, 75 mm, 80 mm, 90 mm, 100 mm, 150 mm, 200 mm, 250 mm, 300 mm, or the like.

Optionally, the diameter of the battery cell is greater than or equal to 21 mm. Further optionally, the diameter of the battery cell is 30 mm to 60 mm. For example, the diameter of the battery cell may be 25 mm, 30 mm, 35 mm, 40 mm, 45 mm, 50 mm, 55 mm, 60 mm, or the like.

The electrode assembly further includes a positive electrode plate, and the positive electrode plate includes a positive electrode current collector and a positive electrode active layer located on at least one surface of the positive electrode current collector. The positive electrode active layer includes a positive electrode active material.

Optionally, the positive electrode active material includes at least one of a sodium-containing transition metal oxide, a Prussian blue material, and a polyanionic material.

Further optionally, the sodium-containing transition metal oxide includes at least one of a material with a chemical formula of NaₓCu_{y}Fe_{z}MnₐM_{1-y-z-a}O₂, a sodium-iron composite oxide, a sodium-cobalt composite oxide, a sodium-chromium composite oxide, a sodium-manganese composite oxide, a sodium-nickel composite oxide, a sodium-nickel-titanium composite oxide, a sodium-nickel-manganese composite oxide, a sodium-iron-manganese composite oxide, a sodium-nickel-iron-manganese composite oxide, and a sodium-nickel-cobalt-manganese composite oxide. In NaₓCu_{y}Fe_{z}MnₐM_{1-y-z-a}O₂, M includes at least one of Li, Ni, Mg, Zn, Co, Al, Zr, and Ti, 0 < x ≤ 1, 0 < y ≤ 0.5, 0 < z ≤ 0.5, and 0 < a ≤ 0.5. It can be understood that the values of x, y, z, and a satisfy the charge balance of the chemical formula.

Further optionally, the Prussian blue material includes a chemical formula of AₓM[M'(CN)₆]y·zH₂O, where Ais one or more of an alkali metal cation, an alkaline earth metal cation, Zn²⁺, and Al³⁺, M is a transition metal, and M' is a transition metal, 0 < x ≤ 2, 0.8 ≤ y < 1, and 0 < z ≤ 20.

Further optionally, the polyanionic material includes at least one of a phosphate, a fluorophosphate, a pyrophosphate, and a sulfate. Further optionally, the polyanionic material includes at least one of a sodium-iron phosphate compound, a sodium-manganese phosphate compound, and a sodium-cobalt phosphate compound. Further optionally, the polyanionic material includes at least one of NaFePO₄, Na₃V₂(PO₄)₃, NaM"PO₄F, and Na₃(VO_{c})₂(PO₄)₂F_{3-2c}. M" includes at least one of V, Fe, Mn, and Ni, and 0 ≤ c ≤ 1.

In some embodiments, the compaction density of the positive electrode active layer is 2 g/cm³ to 3.3 g/cm³. Optionally, the compaction density of the positive electrode active layer may be 2 g/cm³, 2.1 g/cm³, 2.2 g/cm³, 2.3 g/cm³, 2.4 g/cm³, 2.5 g/cm³, 2.6 g/cm³, 2.7 g/cm³, 2.8 g/cm³, 2.9 g/cm³, 3 g/cm³, 3.1 g/cm³, 3.2 g/cm³, or the like. Further optionally, the compaction density of the positive electrode active layer is 2.5 g/cm³ to 3 g/cm³.

Another embodiment of the present application provides a secondary battery. The secondary battery includes any one of the above sodium-ion battery cells.

Yet another embodiment of the present application provides an electric device. The electric device includes at least one of the above sodium-ion battery cell or the above secondary battery.

Hereinafter, the secondary battery and the electric device of the present application are described.

Typically, the secondary battery includes a positive electrode plate, a negative electrode plate, an electrolyte, and a separator. During the charging and discharging process of the battery, active ions are intercalated and deintercalated back and forth between the positive electrode plate and the negative electrode plate. The electrolyte conducts ions between the positive electrode plate and the negative electrode plate. The separator is arranged between the positive electrode plate and the negative electrode plate to primarily prevent the positive and negative electrodes from short-circuiting while allowing the passage of ions.

### Positive electrode plate

The positive electrode plate includes a positive electrode current collector and a positive electrode active layer arranged on at least one surface of the positive electrode current collector, and the positive electrode active layer includes a positive electrode active material.

As a non-limiting example, the positive electrode current collector is provided with two surfaces opposite to each other in the thickness direction thereof, and the positive electrode active layer is arranged on either or both of the two opposite surfaces of the positive electrode current collector.

In some embodiments, a metal foil or a composite current collector may be used as the positive electrode current collector. For example, as the metal foil, an aluminum foil may be used. The composite current collector may include a polymer base layer and a metal layer formed on at least one surface of the polymer substrate layer. The composite current collector may be obtained by forming a metal material on a polymer substrate layer. In the positive electrode current collector, the non-limiting example of the metal material may include one or more of aluminum, an aluminum alloy, nickel, a nickel alloy, titanium, a titanium alloy, silver, a silver alloy, and the like. In the positive electrode current collector, the non-limiting example of the polymer substrate layer may include one or more of substrates such as polypropylene (PP), polyethylene terephthalate (PET), polybutylene terephthalate (PBT), polystyrene (PS), and polyethylene (PE).

In some embodiments, a positive electrode active material for use in sodium-ion batteries known in the art may be used as the positive electrode active material. As an example, the positive electrode active materials may be used alone or in combination of two or more. The positive electrode active substance may be selected from a sodium-iron composite oxide, a sodium-cobalt composite oxide, a sodium-chromium composite oxide, a sodium-manganese composite oxide, a sodium-nickel composite oxide, a sodium-nickel-titanium composite oxide, a sodium-nickel-manganese composite oxide, a sodium-iron-manganese composite oxide, a sodium-nickel-iron-manganese composite oxide, a sodium-nickel-cobalt-manganese composite oxide, a sodium-iron phosphate compound, a sodium-manganese phosphate compound, a sodium-cobalt phosphate compound, a Prussian blue material, a polyanionic material, and the like. However, the present application is not limited to these materials, and other conventionally known materials that can be used as the positive electrode active substance for sodium-ion batteries may also be used in the present application. Optionally, the sodium-iron composite oxide includes NaFeO₂. The sodium-cobalt composite oxide includes NaCoO₂. The sodium-chromium composite oxide includes NaCrO₂. The sodium-manganese composite oxide includes NaMnO₂. The sodium-nickel composite oxide includes NaNiO₂. The sodium-nickel-titanium composite oxide includes NaNi_{1/2}Ti_{1/2}O₂. The sodium-nickel-manganese composite oxide includes NaNi_{1/2}Mn_{1/2}O₂. The sodium-iron-manganese composite oxide includes Na_{2/3}Fe_{1/3}Mn_{2/3}O₂. The sodium-nickel-cobalt-manganese composite oxide includes NaNi_{1/3}Co_{1/3}Mn_{1/3}O₂. The sodium-iron phosphate compound includes NaFePO₄. The sodium-manganese phosphate compound includes NaMnPO₄. The sodium-cobalt phosphate compound includes NaCoPO₄. The polyanionic material includes at least one of a phosphate, a fluorophosphate, a pyrophosphate, and a sulfate.

In some of the examples, the positive electrode active layer further optionally includes a binder. As a non-limiting example, the binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin.

In some of the examples, the positive electrode active layer further optionally includes a conductive agent. As a non-limiting example, the conductive agent may include one or more of superconducting carbon, acetylene black, carbon black, Ketjen black, a carbon dot, a carbon nanotube, graphene, and a carbon nanofiber.

In some of the examples, the positive electrode plate can be prepared in the following manner: dispersing the above components for preparing the positive electrode plate, such as the positive electrode active material, the conductive agent, the binder, and any other components, in a solvent to form a positive electrode slurry; and coating at least one side surface of the positive electrode current collector with the positive electrode slurry, and performing drying, cold pressing, and other processes, such that the positive electrode plate can be obtained. The type of the solvent may be selected from, but is not limited to, any one of the aforementioned embodiments, for example, N-methylpyrrolidone (NMP). The surface of the positive electrode current collector coated with the positive electrode slurry may be a single surface of the positive electrode current collector, or may be two surfaces of the positive electrode current collector.

### Negative electrode plate

The negative electrode plate includes a negative electrode current collector and a negative electrode active layer arranged on at least one surface of the negative electrode current collector, and the negative electrode active layer includes a negative electrode active material.

As a non-limiting example, the negative electrode current collector is provided with two surfaces opposite to each other in the thickness direction thereof, and the negative electrode active layer is arranged on either or both of the two opposite surfaces of the negative electrode current collector.

The negative electrode current collector may be the aforementioned metal foil or the metal/polymer composite current collector.

In some of the examples, a negative electrode active material for use in batteries known in the art may be used as the negative electrode active material. As a non-limiting example, the negative electrode active material may include one or more of the following materials: artificial graphite, natural graphite, soft carbon, hard carbon, a silicon-based material, a tin-based material, lithium titanate, and the like. The silicon-based material may include one or more of elemental silicon, a silicon-oxygen compound, a silicon-carbon composite, a silicon-nitrogen composite, and a silicon alloy. The tin-based material may include one or more of elemental tin, a tin-oxygen compound, and a tin alloy. However, the present application is not limited to these materials, and other conventional materials that can be used as negative electrode active materials for batteries may also be used. These negative electrode active materials may be used alone or in combination of two or more. In some examples, the negative electrode active material includes hard carbon.

In some of the examples, the negative electrode active layer further optionally includes a binder. The binder may include one or more of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some of the examples, the negative electrode film layer further optionally includes a conductive agent. The conductive agent may include one or more of superconducting carbon, acetylene black, carbon black, Ketjen black, a carbon dot, a carbon nanotube, graphene, and a carbon nanofiber.

In some of the examples, the negative electrode active layer further optionally includes other auxiliary agents, such as a thickener (e.g., sodium carboxymethylcellulose (CMC-Na)).

In some of the examples, the negative electrode plate can be prepared in the following manner: dispersing the above components for preparing the negative electrode plate, such as the negative electrode active material, the conductive agent, the binder, and any other components, in a solvent (a non-limiting example of the solvent, such as deionized water) to form a negative electrode slurry; and coating at least one side surface of the negative electrode current collector with the negative electrode slurry, and performing drying, cold pressing, and other processes, such that the negative electrode plate can be obtained. The surface of the negative electrode current collector coated with the negative electrode slurry may be a single surface of the negative electrode current collector, or may be two surfaces of the negative electrode current collector.

### Electrolyte

The electrolyte conducts ions between the positive electrode plate and the negative electrode plate. The present application does not particularly limit the type of the electrolyte, and a choice can be made as needed. For example, the electrolyte may be liquid, gel, or all solid.

In some embodiments, the electrolyte is an electrolytic solution. The electrolytic solution includes an electrolyte salt and a solvent.

In some of the examples, the electrolyte salt may include one or more of sodium hexafluorophosphate (NaPF₆), sodium tetrafluoroborate (NaBF₄), sodium perchlorate (NaClO₄), sodium hexafluoroarsenate (NaAsF ₆), sodium bis(fluorosulfonyl)imide (NaFSI), sodium bis(trifluoromethanesulfonyl)imide (NaTFSI), sodium trifluoromethanesulfonate (NaTFS), sodium difluorophosphate (NaPO₂ F₂), sodium difluoro(oxalato)borate (NaDFOB), sodium bis(oxalato)borate (NaBOB), sodium difluorobis(oxalato)phosphate (NaDFOP), and sodium tetrafluoro(oxalato)phosphate (NaTFOP).

In some of the examples, the solvent may include one or more of ethylene carbonate (EC, 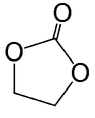 ), propylene carbonate (PC, 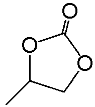 ), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butene carbonate ( 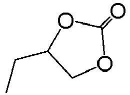 ), fluoroethylene carbonate (FEC), methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some of the examples, the electrolytic solution further optionally includes an additive. For example, the additive may include a negative electrode film-forming additive and a positive electrode film-forming additive, and may further include an additive capable of improving certain properties of the battery, such as an additive for improving the overcharge performance of the battery and an additive for improving the high- or low-temperature performance of the battery.

In some embodiments, the additive in the electrolytic solution may include, but is not limited to, one or more of fluoroethylene carbonate (FEC), difluoroethylene carbonate (DFEC), trifluoromethylethylene carbonate (TFPC), and the like.

### Separator

In some of the examples, the secondary battery further includes a separator. The present application does not particularly limit the type of the separator, and any porous-structure separator known to have good chemical stability and mechanical stability may be selected.

In some of the examples, the material of the separator may include one or more of glass fiber, non-woven fabric, polyethylene, polypropylene, and polyvinylidene fluoride. The separator may be a single-layer film or a multi-layer composite film, and there is no particular limitation on this. When the separator is a multi-layer composite film, the materials of the layers may be the same or different, and there is no particular limitation on this.

In some of the examples, the positive electrode plate, the negative electrode plate, and the separator may be manufactured into an electrode assembly through a winding process.

In the present application, unless otherwise stated, the "battery cell" refers to a basic unit capable of converting chemical energy and electric energy into each other. Further, the battery cell generally includes at least a positive electrode plate, a separator, a negative electrode plate, and an electrolyte. During the charging and discharging process of the battery, active ions are intercalated and deintercalated back and forth between the positive electrode plate and the negative electrode plate. The separator is arranged between the positive electrode plate and the negative electrode plate, and the separator can insulate electrons, prevent an internal short circuit, and enable active ions to pass through and move between the positive electrode and the negative electrode. The electrolyte conducts active ions between the positive electrode plate and the negative electrode plate.

In some embodiments, the secondary battery may be a battery module or a battery pack.

The battery module includes at least one battery cell. The number of the battery cells included in the battery module may be one or more, and those skilled in the art may select an appropriate number according to the application and capacity of the battery module.

In the battery module, a plurality of battery cells may be sequentially arranged in the length direction of the battery module. Certainly, the arrangement may also be in any other manner. Further, the plurality of battery cells may be fixed by fasteners.

Optionally, the battery module may further include a shell having an accommodating space in which the plurality of battery cells are accommodated.

In some of the examples, the above battery module may also be assembled into a battery pack. The number of battery modules included in the battery pack may be one or more, and those skilled in the art may select an appropriate number based on the application and capacity of the battery pack.

The battery pack may include a battery case and a plurality of battery modules disposed in the battery case. The battery case includes an upper case body and a lower case body. The upper case body is capable of lidding the lower case body to form a closed space for accommodating the battery modules. The plurality of battery modules may be arranged in any manner in the battery case.

In addition, the present application further provides an electric device. The electric device includes the secondary battery according to the present application. The secondary battery may be used as a power source for the electric device, or as an energy storage unit for the electric device. The electric device may include a mobile device, an electric vehicle, an electric train, a ship, a satellite, an energy storage system, and the like, but is not limited thereto. The mobile device may be, for example, a mobile phone, a laptop computer, etc. The electric vehicle may be, for example, a pure electric vehicle, a hybrid electric vehicle, a plug-in hybrid electric vehicle, an electric bicycle, an electric scooter, an electric golf cart, an electric truck, etc., but is not limited thereto.

As the electric device, a secondary battery may be selected based on the usage requirements of the electric device.

As an example, the electric device may be a pure electric vehicle, a hybrid electric vehicle, a plug-in hybrid electric vehicle, or the like. To meet the requirements of the electric device for high power and high energy density of the secondary battery, a battery pack or a battery module may be used.

As another example, the device may be a mobile phone, a tablet computer, a laptop computer, or the like. The device is generally required to be light and thin, and a secondary battery cell may thus be used as a power source.

In order to make the technical problems to be addressed, the technical solutions, and the beneficial effects of the present application more apparent, the present application is further described in detail below with reference to the examples. Apparently, the described examples are merely some examples of the present application, rather than all of the examples. The following description of at least one exemplary example is merely illustrative and is in no way intended to limit the present application and the application thereof. Based on the examples in the present application, all other examples obtained by those of ordinary skills in the art without creative work shall fall within the protection scope of the present application.

The examples without techniques or conditions specified therein are implemented according to techniques or conditions described in the literature in the art or according to product instructions. Reagents or instruments used herein without specified manufacturers are all commercially available conventional products.

The preparation methods for the battery cells in the examples and comparative examples are as follows.

### (1) Preparation of positive electrode plate

A positive electrode active material NaNi_{0.22}Cu_{0.11}Fe_{0.33}Mn_{0.34}O₂, a conductive agent acetylene black, and a binder polyvinylidene fluoride (PVDF) were mixed uniformly in a mass ratio of 97:2:1 and added into a solvent N-methylpyrrolidone (NMP) to prepare a positive electrode slurry. A positive electrode current collector aluminum foil was coated with the positive electrode slurry uniformly and dried, followed by cold pressing, die cutting, and slitting to prepare a positive electrode plate.

### (2) Preparation of negative electrode plate

A negative electrode active substance hard carbon, a conductive agent acetylene black, a thickener sodium hydroxymethylcellulose, and a binder styrene-butadiene rubber were added into the solvent water in a mass ratio of 96:2:1:1 and mixed uniformly to prepare a negative electrode slurry. A negative electrode current collector was coated with the negative electrode slurry uniformly and dried, followed by cold pressing, die cutting, and slitting to prepare a negative electrode plate. The types of the negative electrode current collectors are detailed in Table 1.

### (3) Preparation of electrolytic solution

Sodium hexafluorophosphate was dissolved in a mixed solvent of ethyl methyl carbonate (EMC) and propylene carbonate (PC) (a volume ratio of ethyl methyl carbonate to propylene carbonate being 58:42), and a fluoroethylene carbonate (FEC) additive was added to obtain an electrolytic solution. The concentration of sodium hexafluorophosphate in the electrolytic solution was 1 mol/L, and the mass percentage of FEC was 5 wt%.

### (4) Separator

A polyethylene separator was used.

### (5) Preparation of battery cell

The positive electrode plate, the separator, and the negative electrode plate were stacked in sequence to enable the separator to be located between the positive electrode and the negative electrode for isolation, and the stack was then wound to obtain an electrode assembly. The electrode assembly was placed in a cylindrical housing, and a sodium-ion battery cell was obtained through processes such as packaging, liquid injection, formation, and degassing. The dimension of the battery cell was 32.6 mm × 130 mm.

The diameter L1 of the electrode assembly in the battery cell of Example 1, the diameter L2 of the accommodating cavity of the housing, the group margin L1/L2, and the density of the negative electrode current collector, and the like are detailed in Table 1.

Examples 2 to 10 have similar preparation methods to Example 1, and the differences are detailed in Table 1.

### Comparative Example 1

Similar to the preparation method of Example 1, the difference was that: in the preparation of the battery cell, the positive electrode plate, the separator, and the negative electrode plate were stacked in sequence to enable the separator to be located between the positive electrode and the negative electrode for isolation, and the stack was then wound to obtain an electrode assembly. The electrode assembly was placed in a prismatic housing, and a sodium-ion battery cell was obtained through processes such as packaging, liquid injection, formation, and degassing. The dimension of the battery cell was 15 mm × 100 mm × 80 mm.

The length L3 of the electrode assembly in the battery cell of Comparative Example 1, the length L4 of the accommodating cavity of the housing, the group margin L3/L4, the density of the negative electrode current collector, and the like are detailed in Table 1.

Comparative Examples 2 to 4 have similar preparation methods to Comparative Example 1, and the differences are detailed in Table 1.

### Test Example

(1) Volumetric energy density test of the battery cell: The battery cell was discharged to a cut-off voltage of 1.5 V at 0.33C, left to stand for 10 min; the battery cell was charged to a cut-off voltage of 3.9 V at 0.33C, left to stand for 10 min; and then the battery cell was discharged to a cut-off voltage of 1.5 V at 0.33C, and the discharge energy was taken as the energy E of the battery cell. The volume V of the housing of the battery cell was measured. The volumetric energy density of the battery cell = E/V, in units of Watt-hours per liter (Wh/L). The test results are shown in Table 1.
(2) Mass energy density test of the battery cell: The battery cell was discharged to a cut-off voltage of 1.5 V at 0.33C, left to stand for 10 min; and the battery cell was charged to a cut-off voltage of 3.9 V at 0.33C, left to stand for 10 min; then the battery cell was discharged to a cut-off voltage of 1.5 V at 0.33C, and the discharge energy was taken as the energy E of the battery cell. The mass M of the battery cell was measured. The volumetric energy density of the battery cell = E/M, in units of Watt-hours per kilogram (Wh/kg). The test results are shown in Table 1.
(3) Battery cycle performance test: The battery was charged at 0.33C to a cut-off voltage of 3.9 V at 25 °C, left to stand for 5 min, and discharged at 0.33C to a cut-off voltage of 1.5 V. The capacity C₁ in one cycle was recorded, and the cycle was repeated until Cₙ/C₁ × 100% = 80%. The number n of cycles at this point was recorded. The test results are shown in Table 1.

**Table 1**

| | Housing shape | L1 or L3 | L2 or L4 | L1/L2 or L3/L4 | Material of negative electrode current collector | Thickness of negative electrode current collector | Density of negative electrode current collector | Elongation of negative electrode current collector | Volumetric energy density | Mass energy density | Number of cycles |
|---|---|---|---|---|---|---|---|---|---|---|---|
| Example 1 | Cylindrical | 30.4 | 32 | 0.95 | Aluminum foil | 12 | 2.70 | 3.50% | 280 | 136 | 2800 |
| Example 2 | Cylindrical | 30.7 | 32 | 0.96 | Aluminum foil | 12 | 2.70 | 3.50% | 282 | 139 | 2832 |
| Example 3 | Cylindrical | 31.0 | 32 | 0.97 | Aluminum foil | 12 | 2.70 | 3.50% | 284 | 144 | 2850 |
| Example 4 | Cylindrical | 31.4 | 32 | 0.98 | Aluminum foil | 12 | 2.70 | 3.50% | 287 | 148 | 2760 |
| Example 5 | Cylindrical | 31.7 | 32 | 0.99 | Aluminum foil | 12 | 2.70 | 3.50% | 292 | 152 | 2562 |
| Example 6 | Cylindrical | 30.4 | 32 | 0.95 | PET substrate layer (6 µm) + aluminum metal layer (2 µm) | 8 | 1.73 | 3.50% | 283 | 157 | 2825 |
| Example 7 | Cylindrical | 31.0 | 32.0 | 0.97 | Aluminum foil | 12 | 2.7 | 2.50% | 282 | 143 | 2835 |
| Example 8 | Cylindrical | 31.0 | 32.0 | 0.97 | Aluminum foil | 12 | 2.7 | 4.00% | 285 | 145 | 2842 |
| Example 9 | Cylindrical | 31.0 | 32.0 | 0.97 | Aluminum foil | 12 | 2.7 | 4.80% | 288 | 146 | 2838 |
| Example 10 | Cylindrical | 31.0 | 32.0 | 0.97 | Aluminum foil | 12 | 2.7 | 5.50% | 290 | 148 | 2750 |
| Comparative Example 1 | Prismatic | 13.3 | 14.0 | 0.95 | Aluminum foil | 12 | 2.70 | 3.50% | 280 | 136 | 2350 |
| Comparative Example 2 | Prismatic | 13.0 | 14.0 | 0.93 | Aluminum foil | 12 | 2.70 | 3.50% | 274 | 132 | 2418 |
| Comparative Example 3 | Prismatic | 13.3 | 14.0 | 0.95 | Copper foil | 8 | 8.90 | 3.50% | 283 | 123 | 2400 |
| Comparative Example 4 | Prismatic | 13.3 | 14.0 | 0.95 | PP substrate layer (5 µm) + copper metal layer (3 µm) | 8 | 5.50 | 3.50% | 283 | 127 | 2426 |

In Table 1, L1 is the diameter of the electrode assembly in the battery cell, in units of mm. L2 is the diameter of the accommodating cavity of the housing, in units of mm. L3 is the length of the electrode assembly in the battery cell, in units of mm. L4 is the length of the accommodating cavity of the housing, in units of mm. L1/L2 is the group margin of the cylindrical battery. L3/L4 is the group margin of the prismatic battery. The unit of the thickness of the negative electrode current collector is µm. The unit of the density of the negative electrode current collector is g/cm3. The unit of volumetric energy density is Wh/L. The unit of mass energy density is Wh/kg. The unit of the number of cycles is times.

As can be seen from the comparison between Examples 1 to 10 and Comparative Examples 1 to 4, in the sodium-ion battery cell, when a negative electrode current collector with a relatively low density is used, combined with a relatively large group margin, and a cylindrical housing is simultaneously used, the battery cell has both a relatively high volumetric energy density and a relatively high mass energy density while achieving relatively good cycle performance.

As can be seen from Examples 1 to 5, better cycle performance can be achieved when the group margin of the battery cell is 0.95 to 0.97.

As can be seen from the comparison between Example 6 and Example 1, when the negative electrode current collector is a metal/polymer composite current collector, the battery cell has a higher volumetric energy density, a higher mass energy density, and better cycle performance.

As can be seen from the comparison between Example 3 and Examples 7 to 10, when the elongation of the negative electrode current collector is within an appropriate range, especially 3.5% to 5.0%, the battery cell can simultaneously achieve a relatively high volumetric energy density, a relatively high mass energy density, and better cycle performance.

The technical features of the examples described above may be combined in any manner. For brevity, not all possible combinations of the technical features in the above examples are described. However, as long as no contradiction exists in the combinations of the technical features, such combinations should be considered to be within the scope of the specification.

The examples described above only represent several embodiments of the present application. Although the descriptions of these examples are relatively specific and detailed, they should not be construed as limiting the patent scope of the present disclosure. It should be noted that various changes and modifications can be made by those skilled in the art without departing from the concept of the present application, and these changes and modifications all shall fall within the protection scope of the present application. Therefore, the scope of protection of the patent in the present application shall be subjected to the appended claims.

## Claims

1. A sodium-ion battery cell, comprising an electrode assembly and a housing, wherein the housing is cylindrical, an accommodating cavity is provided inside the housing, and the electrode assembly is located inside the accommodating cavity; the electrode assembly comprises a negative electrode plate, the negative electrode plate comprises a negative electrode current collector and a negative electrode active layer located on at least one surface of the negative electrode current collector, a density of the negative electrode current collector is ≤ 5.0 g/cm³, and a group margin of the sodium-ion battery cell satisfies: 0.95 ≤ group margin < 1, wherein the group margin is a ratio of a diameter of the electrode assembly to a diameter of the accommodating cavity.

2. The sodium-ion battery cell according to claim 1, wherein the density of the negative electrode current collector is 1.3 g/cm³ to 3.5 g/cm³.

3. The sodium-ion battery cell according to claim 1 or 2, wherein the group margin of the sodium-ion battery cell is 0.95 to 0.97.

4. The sodium-ion battery cell according to any one of claims 1 to 3, wherein an elongation of the negative electrode current collector is ≥ 3%.

5. The sodium-ion battery cell according to any one of claims 1 to 4, wherein the elongation of the negative electrode current collector is 3.5% to 5.0%.

6. The sodium-ion battery cell according to any one of claims 1 to 5, wherein a ratio of a thickness of the negative electrode current collector to a thickness of the negative electrode active layer is ≤ 0.2.

7. The sodium-ion battery cell according to any one of claims 1 to 6, wherein the ratio of the thickness of the negative electrode current collector to the thickness of the negative electrode active layer is 0.03 to 0.15.

8. The sodium-ion battery cell according to any one of claims 1 to 7, wherein the thickness of the negative electrode current collector is 6 µm to 12 µm.

9. The sodium-ion battery cell according to any one of claims 1 to 8, wherein the thickness of the negative electrode current collector is 6.5 µm to 10 µm.

10. The sodium-ion battery cell according to any one of claims 1 to 9, wherein the negative electrode current collector comprises at least one of a metal foil or a metal/polymer composite current collector.

11. The sodium-ion battery cell according to any one of claims 1 to 10, wherein the metal/polymer composite current collector comprises a polymer substrate layer and a metal layer located on at least one surface of the polymer substrate layer.

12. The sodium-ion battery cell according to claim 11, wherein the polymer substrate layer comprises at least one of polypropylene, polyethylene terephthalate, polybutylene terephthalate, polystyrene, and polyethylene.

13. The sodium-ion battery cell according to claim 11 or 12, wherein the metal layer comprises at least one of copper, a copper alloy, aluminum, an aluminum alloy, nickel, a nickel alloy, titanium, a titanium alloy, silver, and a silver alloy.

14. The sodium-ion battery cell according to any one of claims 1 to 13, wherein the sodium-ion battery cell further comprises an electrolyte, and the electrolyte is located inside the accommodating cavity; the sodium-ion battery cell satisfies: m/C₀ ≤ 6 g/Ah, wherein m represents a mass of the electrolyte (unit: g), and C₀ represents a rated capacity of the sodium-ion battery cell (unit: Ah).

15. The sodium-ion battery cell according to claim 14, wherein 4 g/Ah ≤ m/C₀ ≤ 5 g/Ah.

16. The sodium-ion battery cell according to any one of claims 1 to 15, wherein a compaction density of the negative electrode active layer is 0.7 g/cm³ to 1.3 g/cm³.

17. The sodium-ion battery cell according to any one of claims 1 to 16, wherein the compaction density of the negative electrode active layer is 0.8 g/cm³ to 1.2 g/cm³.

18. The sodium-ion battery cell according to any one of claims 1 to 17, wherein a ratio of a height of the battery cell to a diameter of the battery cell is greater than or equal to 3.5.

19. The sodium-ion battery cell according to any one of claims 1 to 18, wherein the ratio of the height of the battery cell to the diameter of the battery cell is 4 to 6.

20. The sodium-ion battery cell according to any one of claims 1 to 19, wherein the height of the battery cell is greater than or equal to 60 mm.

21. The sodium-ion battery cell according to any one of claims 1 to 20, wherein the height of the battery cell is 70 mm to 300 mm.

22. The sodium-ion battery cell according to any one of claims 1 to 21, wherein the diameter of the battery cell is greater than or equal to 21 mm.

23. The sodium-ion battery cell according to any one of claims 1 to 22, wherein the diameter of the battery cell is 30 mm to 60 mm.

24. A secondary battery, comprising the sodium-ion battery cell according to any one of claims 1 to 23.

25. An electric device, comprising at least one of the sodium-ion battery cell according to any one of claims 1 to 23 or the secondary battery according to claim 24.
